# EUROPEAN PATENT APPLICATION

(11) **EP 4 113 765 A1**
(43) Date of publication of application: **04.01.2023**
(21) Application number: 21182037.8
(22) Date of filing: 28.06.2021
(51) Int. Cl.: H02G 3/12, E04F 15/024, H01R 13/504, H01R 13/506, H01R 24/76, H02G 3/08, H02G 3/10, H02G 3/14, H02G 3/16, H02G 3/18, H04R 1/02

(54) **AN ELECTRONICAL OR ELECTRICAL MODULE**

(71) Applicant: Tp46 BVBA, 9850 Deinze (BE)
(72) Inventor: Van Quickenborne, Tanguy, 9850 Deinze (BE)
(74) Representative: IP HILLS NV

(57) **Abstract**

An electronical or electrical module is provided. The module comprises:
- an electronical or electrical component;
- a flush-mounted box having an open front end adapted to receive the electronical or electrical component; and
- a front plate for covering the open front end of the flush-mounted box, wherein the flush-mounted box is provided at its front end with a first coupling means encompassing the front open end. The front plate is provided with a second coupling means at its backside. The first coupling means and the second coupling mean are mechanically connectable with each other.

The first coupling means and the second coupling means form a snap locking means or snap locking mechanism or system.

## Description

### Field of the Invention

The present invention generally relates to electronical or electrical modules which are adapted to be mounted in a wall in which they are integrated. The invention further relates to kits of parts for the provision of such electronical or electrical modules, and methods to mount an electronical or electrical module in a wall.

### Background of the Invention

Nowadays, most of the electronical or electrical modules which are mounted in-wall, are encompassed with a polymeric frame, the module itself being covered with a cover plate, typically from polymeric material. The electronical or electrical component is mounted inside a flush-mounted box which itself is located inside an opening in the wall.

In more advanced electronical or electrical installations, the electronical or electrical modules are to be flush with the wall itself, avoiding the use of mostly polymeric frames, and preferably having cover plates from the same material as the material out of which the outer surface of the wall is provided. This wall may be a floor, ceiling or side wall.

An example of such electronical or electrical module to be flush with the wall is the socket as described in BE 1020913A3. The wall and the socket are flush and the front cover of the socket is made out of the same material as the wall itself.

This and similar modules are still to some extent complex to mount and it requires quite some skills from the electrician to make the integration perfect.

### Summary of the Invention

It is an object of the present invention to provide electronical or electrical modules which can be mount flush with the wall in which it needs to be integrated, a.o. for esthetical reasons, and require less high skills to do the installation of the electronical or electrical module.

According to the invention, an electronical or electrical module is provided. The module comprises:
- an electronical or electrical component;
- a flush-mounted box having an open front end adapted to receive the electronical or electrical component; and
- a front plate for covering the open front end of the flush-mounted box,
wherein the flush-mounted box is provided at its front end with a first coupling means encompassing the front open end. The front plate is provided with a second coupling means at its backside. The first coupling means and the second coupling means are mechanically connectable with each other.

According to a first aspect of a first facet of the invention, the first coupling means and the second coupling means may form a snap locking means or snap locking mechanism or system. Such snap locking means further provide a simple, electrically insulating, firm and sturdy locking between the flush-mounted box and the front plate. Much more firm and strudy as coimpared to other locking means like hook and loop systems of magnetic coupling.

A snap locking means is preferred. A snap locking means is a coupling means where two components are pushed one to the other, usually substantially perpendicularly, a protruding part of one of the components clicking in a recess of the other component.

According to some embodiments, the first coupling means may comprise a frame having an opening encompassing said front open end. The opening in said frame may be provided with a recessed collar, the flush mounted box having a rim fitting into said recessed collar. As such the outer end of the flush mounted box may be aligned with the plane formed by the frames plane. The outer end of the flush mounted box is flush with the frame.

According to some embodiments, the first coupling means may comprise one or more elastomeric plugs, each of these plugs being plugged into an aperture in the frame. The first coupling means may comprise at least four elastomeric plugs evenly distributed around said opening in said frame. The frame may have a quadrilateral circumference, with the opening optionally provided central in the quadrilateral. This quadrilateral may be rectangular or square. Each of the plugs may be located in the frame section delimited by the opening in the frame and the corner of the quadrilateral. As such, a well-balanced coupling may be provided to the module. The plugs may be rubber or silicone plugs. The plugs may have a substantially cylindrical or conical shape. The outer walls of the cylinder or cone may be provided with a radial recess having a diameter less than the aperture in the frame, the diameter of the plug at other positions being larger than the diameter of the aperture. The plug can be pushed into the aperture, until the aperture fist over and in the radial recess of the plug. At the front side of the plug, this is the side of the plug oriented towards the front side of the frame, the plug may have a flange for contacting the front side of the frame. The plug may have a central opening or shaft in which an object can be pushed into. The shaft may have a radial protrusion along its shaft surface.

According to some embodiments, the second coupling means may comprise one or more pins, each of said elastomeric plugs being adapted to receive and couple to one pin. The one or more pins may be ball studs. A ball stud is a form comprising a central elongate body on which at one end a spherical outer end is provided. The radius of the sphere is typically larger than the larges diameter of the body. The body is preferably cylindrical or beam-shaped, the beam shape preferably having a polygonal cross section, like a quadrilateral (e.g. rectangular or square), triangular or hexagonal cross section.

The ball side of the ball stud may be pushed into the shaft of the plug. The ball may be pushed beyond the radial protrusion along the inner surface of the shaft. The ball will push the radial protrusion outwards while passing (i.e. the ball snaps into the shaft of the plug), but the protrusion will prevent the ball to pass in the opposite direction, unless a pulling force is executed to the ball stud.

According to some embodiments, the one or more pins may be mechanically or chemically connected to the front plate. The front plate may have at its backside a hole for each of the bodies with a ball studs, the backside being the side facing the flush mounted box. The holes may be threaded, one end of the body having the corresponding tread and being screwed in the hole. Additionally or alternatively, the body end is glued in the hole using appropriate glues, like permanent glues. A quick and easy coupling between the body and the front plate may be provided as such.

The electronical or electrical modules according to the first facet of the present invention have the advantage that the coupling ring can be coupled in a simple way with the coupling frame, while being capable of establishing a firm connection between the coupling ring and coupling frame.

A front plate can be provided from the same material as the material which constitutes the outer surface of the wall in which the electronical or electrical module needs to be mounted. The second coupling means needs to be connected to the backside of this front plate. This coupling may be realised mechanically, e.g. by screwing or bolting, or chemically, by e.g. gluing. The chemical coupling, in particular gluing, is preferred.

According to some embodiments, the module further comprises a mounting piece having a web with circumference larger than the circumference of the front plate. The web may be provided with an opening adapted to pass the flush-mounted box through it. The web may be provided with a rim extending from the web perpendicular to at least one side of the web thereby defining a recess in which the front plate may be sunken. The web may be present at the outer side of the rim and/or at the inner side of the rim.

According to some embodiments, the first coupling means may comprise a frame having an opening encompassing the front open end of the flush mounted box, the rim of the mounting piece encompasses the frame when the flush-mounted box is mounted through the opening in the web. At the inner side of the rim, the web may be present such the frame is obstructed to pass though the mounting piece completely. Preferably the web at this side of the rim is a small edge, contacting the outer perimeter of the backside of the frame. The backside of the frame may be coupled to the web by any appropriate means, such as by gluing, e.g. with permanent glue. The web present at the outer side of the rim, can be used to fit the mounting piece to the wall, like a brick wall or a plasterboard wall, in which the module is to be mounted.

So according to some embodiments, the web extends beyond the rim in a direction outwards, i.e. away from the recess. A part of the web may be present within the circumference of the rim. The web, in particularly the web extending beyond the rim in a direction outwards the recess, may be provided with perforations or holes. This outwards extending web may allow the mounting piece to be mounted in front of an opening in a wall in which the electrical or electronical module needs to be mounted. The outwards extending web can be fixed to the part of the wall circumferent to such opening, e.g. by mechanical fixing, e.g. through screwing, or chemically by gluing using appropriate glue, such as silicon glue. When the mounting piece is mounted, the flush-mounted box can be inserted in the opening adapted to pass the flush-mounted box through it. This can even be done after the electrical or electronical component is wired, and the front plate is coupled to the flush mounted box by connecting the coupling ring and frame. The front plate may fit into and become at least partially sunk in the recess defined by the rim. The provision of this mounting piece simplifies the installation of the electronical or electrical module in a flush system relative to the wall.

The web, i.e. the part of the web being present inside the rim, will prevent the front plate to translate further and too far into the opening in the wall. The thickness of the front plate is hence preferably equal or more than the height of the rim extending above the web. The front plate may be fixed to this web inside the rim either mechanically or chemically. The latter can be done using appropriate gluing, like silicon glue. Possibly, between the web and the front plate, a snap fitting is provided, e.g. at some or each of the four corners in case the front plate has a rectangular or square perimeter.

The electronical or electrical modules according to the invention give the possibility to easily install a flush wall mounted electronical or electrical modules. Such electronical or electrical modules can be mounted flush with the wall quite easily and fast and do not require exceptional skills. They do require little to no complex and/or unusual handling of craftsmen to install the electronical or electrical modules flush with the wall, being either the ceiling, the floor or a side wall.

According to some embodiments, the front plate may have a front plate opening for receiving an electronical or electrical plug, the front plate opening allowing the plug to be coupled to the electronical or electrical component.

According to a second aspect of this first facet of the invention, a kit of parts is provided, the kit comprising
- an electronical or electrical component;
- a flush-mounted box having an open front end adapted to receive said electronical or electrical component and
- a front plate for covering said open front end of said flush-mounted box,
wherein said flush-mounted box is provided at its front end with a first coupling means encompassing said front open end and said front plate is provided with a second coupling means at its backside, said first coupling means and said second coupling mean being mechanically connectable with each other.

The first coupling means and the second coupling means may form a snap locking means or snap locking mechanism or system.

According to some embodiments, the kit further may comprise a mounting piece having a web with circumference larger than the circumference of said front plate, the web being provided with an opening adapted to pass the flush-mounted box through it. The mounting piece may have a rim extending from the web perpendicular to at least one side of the web thereby defining a recess in which the front plate can be sunken.

According to a third aspect of this first facet of the invention, a method to mount an electronical or electrical module in a wall is provided, the method comprising
- providing an electronical or electrical module according to the first aspect of this first facet of the invention;
- providing an opening in the wall adapted to receive the flush-mounted box;
- providing said electronical or electrical component in the flush-mounted box;
- providing the front plate to the flush-mounted box;
- coupling said first and second coupling means, thereby coupling the front plate to the flush-mounted box;
- inserting the flush-mounted box in the opening in the wall.

The coupling step may be a snap locking action of the first and second coupling means forming a snap locking means.

According to some embodiments, the electronical or electrical module further may comprise a mounting piece having a web with circumference larger than the circumference of front plate. The web may be provided with an opening to receive the flush-mounted box and a rim extending from the web perpendicular to at least one side of the web and defining a recess in which the front plate (can be sunken. The method further may comprise:
- mounting the mounting piece in said opening in the wall;
- passing the flush-mounted box through the opening in the web of the mounting piece; and
- coupling the flush-mounted box to the web of the mounting piece.

Alternative embodiments of the present invention are provided by the second facet of the invention.

According to a first aspect of this second facet of the invention, an electronical or electrical module is provided, the module comprising:
- an electronical or electrical component;
- a flush-mounted box having an open front end adapted to receive said electronical or electrical component; and
- a front plate for covering said open front end of the flush-mounted box,
wherein the flush-mounted box is provided at its front end with a coupling ring encompassing the front open end. The front plate is provided with a coupling frame at its backside, the coupling ring and coupling frame being mechanically connectable with each other.

Thus the flush-mounted box is provided at its front end with a first coupling means encompassing the front open end, this first coupling means being a coupling ring. The front plate is provided with a second coupling means at its backside being a coupling frame. These first and second coupling means are mechanically connectable with each other

The coupling ring and coupling frame are mechanically connectable or mechanically engaging with each other. The one can directly be coupled to the other, free of any intermediate element necessary to ensure the one being held in place in view of the other.

The inner opening of the ring may be corresponding to the circumference of the outer surface of the open front end of the mounting box. Hence the circumference of outer surface of the open front end of the mounting box may match the inner wall of the coupling ring.

The coupling ring and coupling frame may be provided from polymeric material such as polypropylene, polyethylene, or any similar polymeric material.

According to some embodiments, the coupling ring and coupling frame may be mechanically connectable by bringing the coupling ring and coupling frame in contact with each other and moving one or both relative to the other while keeping this contact. Moving the coupling frame and coupling ring relative to the other during contact, e.g. a rotational and/or a translational movement, is simple and does not require high skills to be performed.

According to some embodiments, the coupling ring and coupling frame may require at least a translation movement to establish the mechanical connection. According to some embodiments, the coupling ring and coupling frame may be part of a snap fit coupling system.

According to some embodiments, the coupling ring and coupling frame may require at least a rotation movement to establish the mechanical connection. So according to some embodiments, the coupling ring and coupling frame may require both at least a rotation movement and a translation movement to establish the mechanical connection. According to some embodiments, the coupling ring and coupling frame may be part of a bayonet coupling, a breech-lock coupling, or a screw coupling.

The coupling ring may be provided with one or more outwards oriented wings. The coupling frame may be provided with an opening fit to receive the coupling ring, and comprising one or more inside oriented pockets to receive the outside oriented wings from the coupling ring during a rotational movement of the coupling ring in view of the coupling frame. The pockets and wings may be dimensioned such that a friction force is build up during insertion of the wing in the pocket. This friction force may prevent a spontaneous, unforced reverse rotation of the coupling ring in view of the coupling frame under normal use of the electronical or electrical module.

According to some embodiments, the module may comprise a locking means to lock the relative movement of the coupling ring and coupling frame once connected to each other. This locking means may be an insert which is to be placed once the mechanical connection between coupling frame and coupling ring is established. The insert may prevent the coupling ring and coupling frame to make the opposite, disconnecting movement. The locking means may have one or more resilient extensions, e.g. barbs, allowing the movement to connect the coupling frame and coupling ring, but preventing the disconnecting movement.

The flush-mounted box and the coupling ring may cooperate in several possible ways. In first embodiments, the coupling ring is an entire part of the flush-mounted box. It is provided around the front open end. To connect with the coupling frame, the box is translated and/or rotated in its entirety in order to connect the coupling ring and flange one to the other.

In second embodiments, the coupling ring is a totally separate element and can be totally disconnected from the flush-mounted box. It is provided around the front open end by passing, e.g. sliding the coupling ring over the external of the flush-mounted box from the box's backside to its front open end. The ring rotates and/or translates around the flush-mounted box and grips the front open end during mechanically connecting the coupling ring to the coupling frame. As an example, the flush-mounted box may have a flange encompassing the circumference (or part of the circumference) of the front open end. The coupling ring may have a collar contacting the flange at the flange's side opposite to the front open-end side of the flush-mounted box. By connecting the coupling ring to the coupling frame, the flange of the flush-mounted box may be squeezed between coupling frame and coupling ring or between coupling ring and front plate.

According to some third embodiments, the coupling ring may be rotatably fixed to the outer end of the flush-mounted box. The coupling ring may rotate around the front open end of the flush-mounted box but cannot be separated from the flush-mounted box. As an example, the flush-mounted box may have a flange encompassing the circumference (or part of the circumference) of the front open end. The coupling ring may have a double collar, one collar contacting the flange at the side opposite to the front open end of the box, the other collar contacting the flange at the side of the front open end of the box. The ring can rotate around the front open end but cannot be removed from the flush-mounted box. The flange slides in the double collar. By connecting the coupling ring to the coupling frame, the flange of the flush-mounted box is held in the double collar from the coupling ring.

These first, second and third embodiments have the advantage that the coupling ring can be coupled in a simple way with the coupling frame, while being capable of establishing a firm connection between the coupling ring and coupling frame.

A front plate can be provided from the same material as the material which constitutes the outer surface of the wall in which the electronical or electrical module needs to be mounted. The coupling frame needs to be connected to the backside of this front plate. This coupling may be realised mechanically, e.g. by screwing or bolting, or chemically, by e.g. gluing. The chemical coupling, in particular gluing, is preferred.

According to some embodiments, the module further may comprise a mounting piece having a web with circumference being larger than the circumference of said front plate, the web being provided with an opening adapted to pass the flush-mounted box through it, and a rim extending from the web perpendicular to at least one side of the web thereby defining a recess in which the front plate can be sunken. Possibly the rim extends at both sides of the web.

According to some embodiments, the web extends beyond the rim in a direction outwards, i.e. away from the recess. A part of the web may be present within the circumference of the rim. The web, in particularly the web extending beyond the rim in a direction outwards the recess, may be provided with perforations or holes. This outwards extending web may allow the mounting piece to be mounted in front of an opening in a wall in which the electrical or electronical module needs to be mounted. The outwards extending web can be fixed to the part of the wall circumferent to such opening, e.g. by mechanical fixing, e.g. through screwing, or chemically by gluing using appropriate glue, such as silicon glue. When the mounting piece is mounted, the flush-mounted box can be inserted in the opening adapted to pass the flush-mounted box through it. This can even be done after the electrical or electronical component is wired, and the front plate is coupled to the flush mounted box by connecting the coupling ring and frame. The front plate may fit into and become at least partially sunk in the recess defined by the rim. The provision of this mounting piece simplifies the installation of the electronical or electrical module in a flush system relative to the wall.

The web, i.e. the part of the web being present inside the rim, will prevent the front plate to translate further and too far into the opening in the wall. The thickness of the front plate is hence preferably equal or more than the height of the rim extending above the web. The front plate may be fixed to this web inside the rim either mechanically or chemically. The latter can be done using appropriate gluing, like silicon glue. Possibly, between the web and the front plate, a snap fitting is provided, e.g. at some or each of the four corners in case the front plate has a rectangular or square perimeter.

The electronical or electrical modules according to the invention give the possibility to easily install a flush wall mounted electronical or electrical modules. Such electronical or electrical modules can be mounted flush with the wall quite easily and fast and do not require exceptional skills. They do require little to no complex and/or unusual handling of craftsmen to install the electronical or electrical modules flush with the wall, being either the ceiling, the floor or a side wall.

According to a second aspect of the second facet of the invention,, a kit of parts is provided, which kit of parts comprises:
- a flush-mounted box having an open front end adapted to receive an electronical or electrical component and being provided with a coupling ring encompassing the open front end of said flush-mounted box;
- a coupling frame adapted for being provided at the backside of a front plate;
wherein said coupling ring and said coupling frame are mechanically connectable through said coupling ring when being provided at the open front end of the flush-mounted box.

The coupling ring can be an entire part of the flush-mounted box, or a separate part of the kit of parts.

According to some embodiments, the kit of parts further may comprise a front plate for covering the open front end of said flush-mounted box.

According to some embodiments, the kit of parts further may comprise a mounting piece having a web with circumference larger than the circumference of the front plate. The web may be provided with an opening adapted to pass the flush-mounted box through it, and a rim extending from the web perpendicular to at least one side of the web thereby defining a recess in which a front plate can be sunken. The mounting piece may be a mounting piece according to the second aspect of the invention.

According to some embodiments, the kit of parts further may comprise an electronical or electrical component fitting in the flush-mounted box.

The kit of parts according to the invention may be used to provide an electronical or electrical module according to the first aspect of the invention.

According to a third aspect of the second facet of the invention, , a method to mount an electronical or electrical module in a wall is provided, the method comprising
- providing an electronical or electrical module according to the first aspect of the present invention;
- providing an opening in the wall adapted to receive the flush-mounted box;
- providing said electronical or electrical component in the flush-mounted box;
- mechanically connecting the coupling ring and the coupling frame; and
- inserting the flush-mounted box in the opening in the wall.

According to some embodiments, the coupling frame may be provided on the backside of a front plate. This may preferably be done by chemically fixing or coupling the coupling frame to the backside of the front plate.

According to some embodiments, the electronical or electrical module further may comprise a mounting piece having a web with circumference larger than the circumference of front plate, the web being provided with an opening to receive the flush-mounted box and a rim extending from the web perpendicular to at least one side of the web and defining a recess in which the front plate can be sunken, the method further comprising:
- mounting the mounting piece in said opening in the wall;
- passing the flush-mounted box through the opening in the web of the mounting piece; and
- coupling flush-mounted box (30) or coupling ring (32) or the front plate to the web of the mounting piece.

The mounting piece used may be a mounting piece according to the second aspect of the invention.

The method to mount an electronical or electrical module in a wall may be a method to mount an electronical or electrical module in a wall, the module being flush with the wall.

According to a third facet of the invention, a mounting piece is provided, the mounting piece has a web with circumference larger than the circumference of said front plate, the web being provided with an opening adapted to pass the flush-mounted box through it, and a rim extending from the web perpendicular to at least one side of the web thereby defining a recess in which the front plate can be sunken. Possibly the rim extends at both sides of the web. A part of the web may be present within the circumference of the rim.

According to some embodiments, the web extends beyond the rim in a direction outwards, i.e. away from the recess. The web, in particularly the web extending beyond the rim in a direction outwards the recess, may be provided with perforations or holes. This outwards extending web may allow the mounting piece to be mounted in front of an opening in a wall in which an electrical or electronical module needs to be mounted. The outwards extending web can be fixed to the part of the wall circumferent to such opening, e.g. by mechanical fixing, e.g. through screwing, or chemically by gluing using appropriate glue, such as silicon glue. When the mounting piece is mounted, a flush-mounted box can be inserted in the opening adapted to pass the flush-mounted box through it. This can even be done after the electrical or electronical component is wired, and a front plate may be coupled to a flush mounted box by connecting a coupling ring and frame. A front plate may fit into and become at least partially sunk in the recess defined by the rim. The front plate may be fixed or coupled to the part of the web present inside the rim or to the rim itself. This coupling may be done using e.g. a snap fit coupling.

Possibly a closing foil may be provided to close the recess at the side of the rim by connecting the foil to the rim along the edge of the rim. In case the rim extends from both sides of the web, two foils may close the recess at both sides. If the rim extends to only one side of the web, the opening in the web itself along the side away from the rim may be closed by a foil.

For all facets of the invention, the flush-mounted box may also be referred to as flush-mount box or flush-mounting box. The box is hidden inside the opening in the wall, which can be e.g. a plaster board wall or a brick wall.

The outer wall of the flush mounted box at the front end of the box is preferably cylindrical in shape. The opening in the front wall, being the opening in the open front end of the box, may be circular, rectangular, or square, though circular is preferred.

The electronical or electrical component may be a socket, a switch, a USB-port, an ethernet socket or multiple ethernet sockets, a timer, a control module for airco or heating, a motion detector, or any other electronical or electrical component.

The front plate may have apertures and blind holes to facilitate, once installed, electrical or electronical coupling of devices through these apertures to the coupling points of the electronical or electrical component located behind the front plate. Hence the electronical or electrical component can be mount in a wall such that the front plate is flush with the encompassing wall in which it is mounted. The front plate can be provided from the same material as the wall around the module, and no frames are needed to encompass the electronical or electrical module installed.

The front plate, to which the coupling frame is attached, and which will provide the final outer surface in the wall in which the component will be mounted, may be e.g. a marble plate, a gypsum or plasterboard, a fiber cement board, and alike. Most preferred, the front plate is made out of hard material, preferably from material with a density equal to or greater than 400 kg/m³.

The flush-mounted box may be provided from polymeric material such as polypropylene, polyethylene, or any similar polymeric material.

The electrical or electronical component may be mounted and fixed in the flush-mounted box using a brace which brace is screwed to the box. The brace may support the electrical or electronical component at its backside.

The independent and dependent claims set out particular and preferred features of the invention. Features from the dependent claims may be combined with features of the independent or other dependent claims, and/or with features set out in the description above and/or hereinafter as appropriate. Features from one facet and/or one aspect of the invention may be combined with features of other facets and/or aspects of the invention as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figure 1 is schematically view of an electrical module according to the first facet of the invention.
Figure 2 is an exploded view of a part of this electrical module of figure 1.
Figures 3 and 4 and 5a schematically shows the provision of an aperture in a wall, which is adapted to receive an electrical module according to the invention.
Figure 5b schematically shows the provision of an electrical module according to the invention in an aperture in a wall.
Figure 6 schematically shows a demounting tool adapted to demount an electrical module according to the invention out of an aperture in a wall.
Figure 7 shows an exploded view of an electrical component being part of an electrical module according to the first or second facet of the invention.
Figures 8 and 9 are schematically views of a part of an electrical module according to the second facet of the invention.
Figure 10 shows the provision of an electrical module according to the second facet of the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B. Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

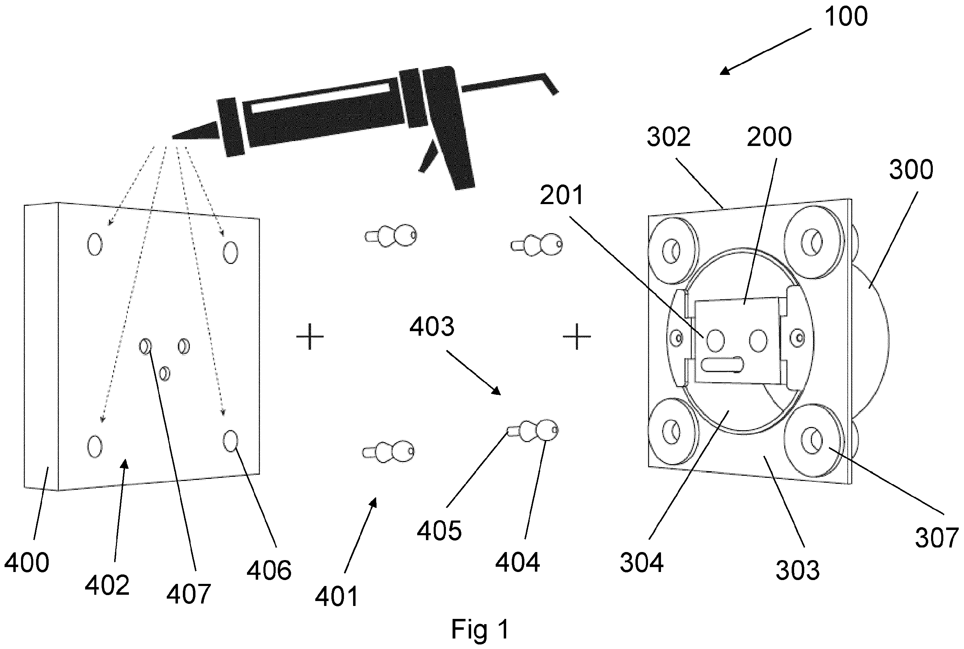

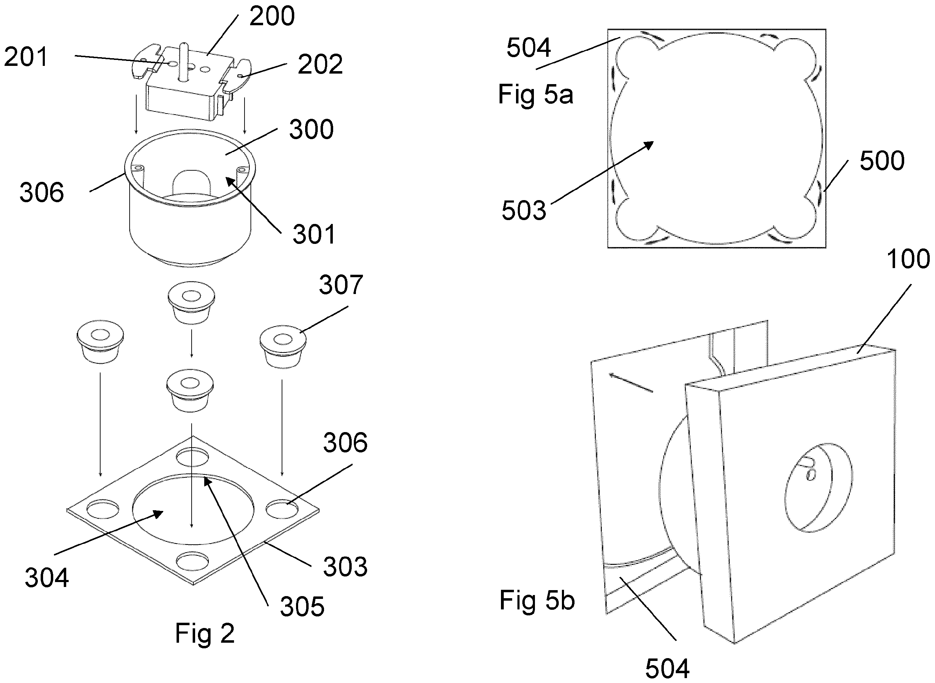

An electronical or electrical module 100 is shown in figures 1 and 2, the module 100 comprises an electronical or electrical component 200 and a flush-mounted box 300 having an open front end 301 adapted to receive said electronical or electrical component 200. The module 100 further comprises a front plate 400 for covering said open front end 301 of said flush-mounted box 300.

The flush-mounted box 300 is provided at its front end 301 with a first coupling means 302 encompassing said front open end 301. The front plate 400 is provided with a second coupling means 401 at its backside.

These first coupling means 302 and second coupling mean 401 are mechanically connectable with each other. In this embodiment the first coupling means and the second coupling means form a snap locking means.

The first coupling means comprises a frame 303 having an opening 304 encompassing the front open end 301 of the flush mounted box 300; The opening 304 in the frame 303 is provided with a recessed collar 305, the flush mounted box 300 having a rim 306 fitting into this recessed collar 305. The first coupling means 302 comprises 4 elastomeric plugs 306, each of these plugs 306 being plugged into an aperture 307 in the frame 303. The four elastomeric plugs 306 are evenly distributed around the opening 304 in the frame 303. The frame 303 is a flat piece of metal or polymer.

Turning to the second coupling means 401, this means comprises four pins 403, each of the elastomeric plugs 306 being adapted to receive and couple to one pin 403. The pins 403 have the shape of ball studs 404 at one end while the other end has a circular cross section. Between the other outer end and the ball stud 404, a cylindrical body 405 is provided. The pins 403 are chemically connected to the backside 402 of the front plate 400. The outer ends are glued into holes 406, the position of the holes 406 corresponding to the positions of the plugs 307.

To perfectly align the entrance holes 201 of the electronical or electrical component 200 with the entrance holes 407 in the front plate 400, the electronical or electrical component 200, the flush mounting box and the front plate 400 are mounted one to the other, and a dummy electrical means is plugged into the entrance holes, while the glue, holding the pins 403 in the holes 406, has not hardened. Once the glue is hardened, the components may be disassembled and provided as a kit of parts.

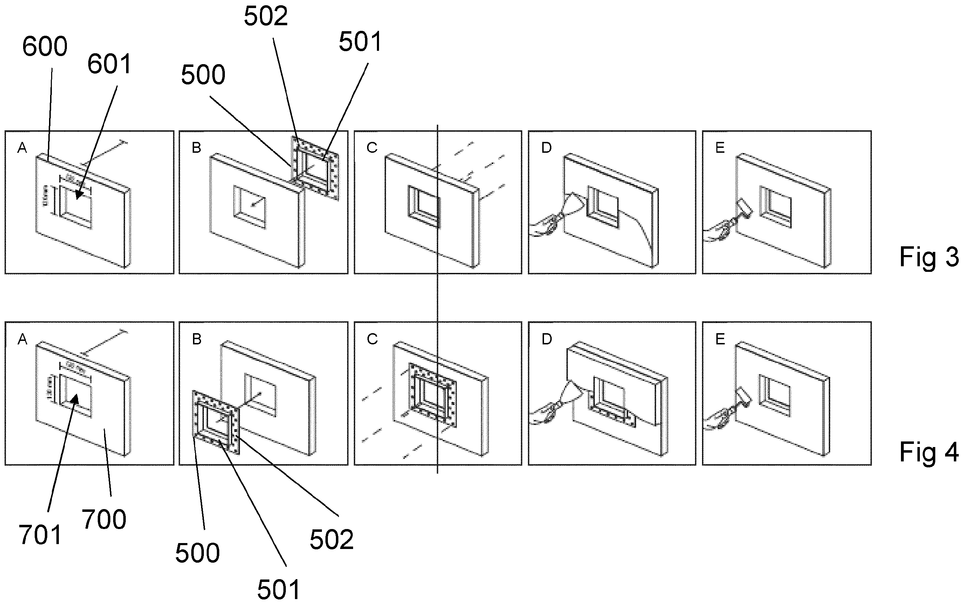

The electronical or electrical module 100 is now to be flush mounted in a wall. One may use a mounting piece 500 as shown in figures 3 and 4. In figure 3, the mounting piece is mounted on a gypsum plate wall 600. An aperture 601 is provided in the gypsum plate wall (see 3A), the edge of the aperture 601 snuggly fitting around the rim 501 of the mounting piece 500. The mounting piece 500 is mounted to the backside of the gypsum plate wall (see 3B), using the web 502 extending beyond the rim to connect the mounting piece to the backside of the gypsum plate wall. the gypsum plate wall is now composed (see 3C). The front side of the gypsum plate wall is finished (see 3D and 3E) and the aperture 601 is ready to receive the electronical or electrical module 100. Obviously the electric or electrical wiring is provided to the backside of the gypsum plate wall at the height of the aperture 601.

In figure 4, the mounting piece is mounted on a brick wall 700. An aperture 701 is provided in the brick wall (see 4A). The mounting piece 500 is mounted to the frontside of the brick wall (see 4B), the edge of the aperture 701 snuggly aligning with the edge of the rim 501 of the mounting piece 500. The rim 501 is oriented away from the brick wall. Possibly the mounting piece 500 may have a rim at the side connecting the brick wall as well. To mount the mounting piece to the brick wall, one may use the web 502 extending beyond the rim, which can be screwed of glued to the brick wall (see 4C). This web 502 is provided with perforations to allow screws to pass through the perforations provided. The front side of the brick wall is finished by plastering and painting (see 4D and 4E) and the aperture 701 is ready to receive the electronical or electrical module 100. Obviously the electric or electrical wiring is provided to the backside of the brick wall at the height of the aperture 701.

In figure 5a, the web extending within the rim of the mounting piece is shown in the aperture 601 or 701, as the case may be. The opening 503 in the web 504 of the mounting piece is composed of a large central circular hole, and four ears, being small circular holes at the location of the plugs 307 which need to be inserted in the aperture 601 or 701. As shown in figure 5b, the electronical or electrical module 100 is inserted in the aperture 601 or 701, while the electrical or electronical component having been wired. The backside of the frame 303 may be glued to the web 504.

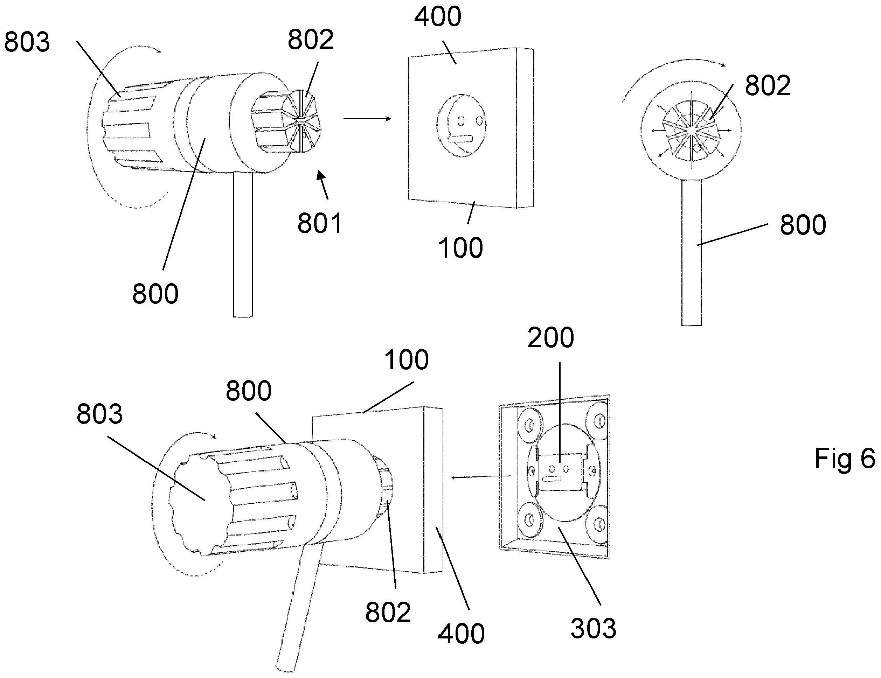

In the event the front plate 400 of the electronical or electrical module 100 is to be demounted, a demounting tool 800 may be used as shown in figure 6. The demounting tool has a front end 801 where a plurality of radially movable pressure elements 802 are provided. By turning knob 803 at the backside of the tool 800, while the plurality of radially movable pressure elements 802 are inserted in the recess at the front side of the face plate 400, the radially movable pressure elements 802 will move radially outwards and press against the circumference of the recess at the front side of the face plate 400. When the pressure is sufficiently high, the face plate 400 can be drawn backwards in axial direction. The snap fitting will disconnect and the face plate 400 may be taken apart from the frame 303. The electronical or electrical component can be taken out from the flush mounting box 300. To mount the face plate back onto the frame 303, the front plate 400 is brought in front of the frame and the snap coupling is pushed together again.

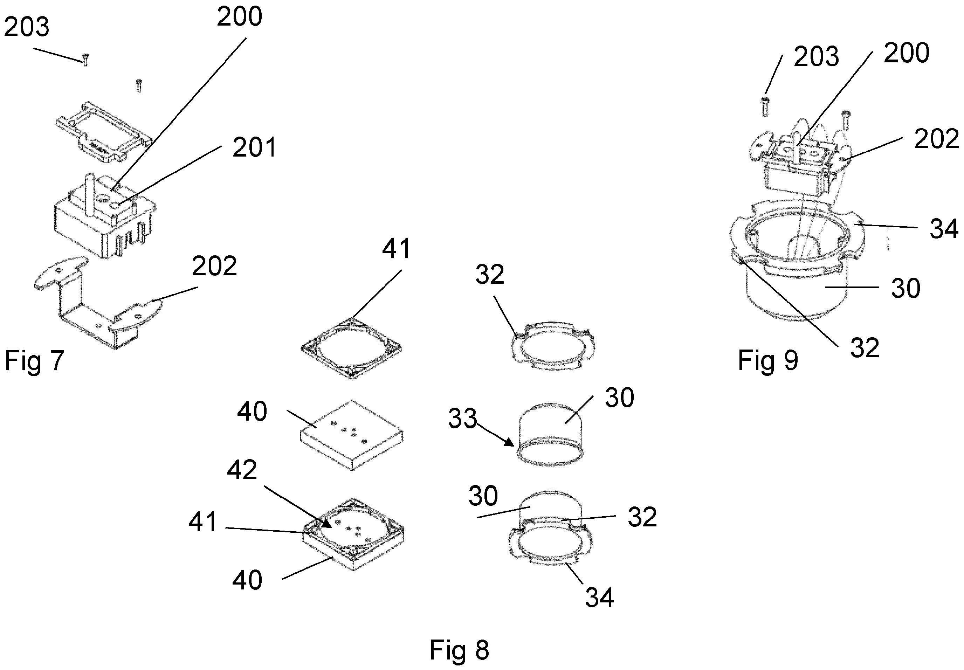

As shown in figure 7, the electronical or electrical component 200 may be provided with a brace 202 which brace is screwed to the box 300.

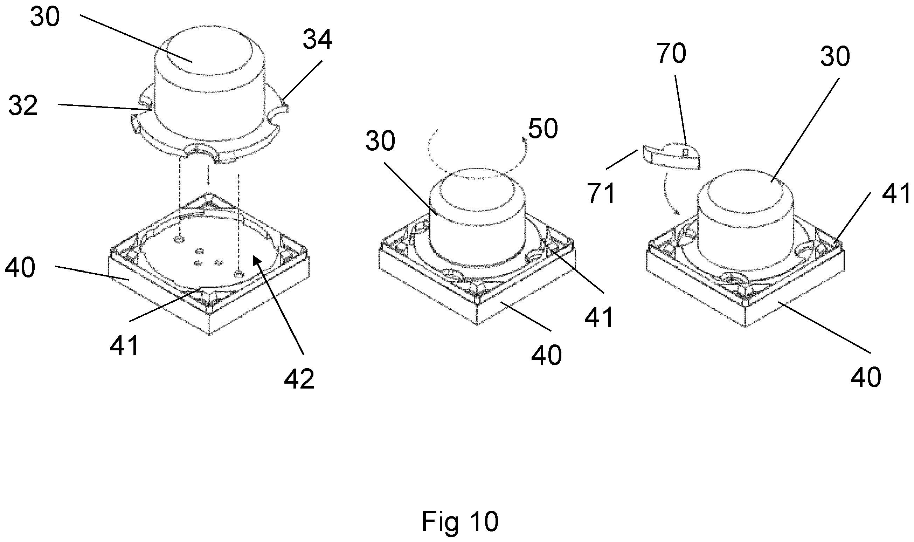

An alternative embodiment of an electronical or electrical module 10 is shown in figures 8 to figure 10.

The electronical or electrical module 10 is provided, the module comprising:
- an electronical or electrical component 200;
- a flush-mounted box 30 having an open front end 31 adapted to receive said electronical or electrical component 200; and
- a front plate 40 for covering the open front end 31 of the flush-mounted box 30.

The flush-mounted box 30 is provided at its front end with a coupling ring 32 encompassing the front open end 31. The front plate 40 is provided with a coupling frame 41 at its backside 42. The coupling ring and coupling frame are mechanically connectable with each other.

In this embodiment, the coupling ring 32 is a totally separate element and can be totally disconnected from the flush-mounted box 30. It is provided around the front open end 31 by sliding the coupling ring over the external of the flush-mounted box 30 from the box's backside to its front open end 31. The ring 32 rotates and/or translates around the flush-mounted box 30 and grips the front open end 31 during mechanically connecting the coupling ring 32 to the coupling frame 41 . As an example, the flush-mounted box has a flange 33 encompassing the circumference of the front open end 31. The coupling ring has a collar contacting the flange at the flange's side opposite to the front open-end side of the flush-mounted box. By connecting the coupling ring to the coupling frame, the flange of the flush-mounted box is squeezed between coupling frame and coupling ring.

The coupling ring and coupling frame are part of a breech-lock coupling. The coupling ring is provided with 4 outwards oriented wings 34. The coupling frame 41 is provided with an opening fit to receive the coupling ring 32 and comprises 4 inside oriented pockets to receive the outside oriented wings 34 from the coupling ring during a rotational movement 50 of the coupling ring 32 in view of the coupling frame 41. The pockets and wings are dimensioned such that a friction force is build up during insertion of the wing in the pocket. This friction force prevents a spontaneous, unforced reverse rotation of the coupling ring 32 in view of the coupling frame 41 under normal use of the electronical or electrical module 10. The coupling ring may be provided with one or more outside oriented wings.

As shown in figure 9, the electrical or electronical component 200 is sunken in the flush mounted box 30 and the electrical or electronical component 200 and the flush mounted box 30 are fixed one into the other by screws 203.

The module 10 comprises a locking means to lock the relative movement of the coupling ring 32 and coupling frame 41 once connected to each other. This locking means are inserts 70 which is to be placed once the mechanical connection between coupling frame 41 and coupling ring 32 is established. The insert may prevent the coupling ring 32 and coupling frame 41 to make the opposite, disconnecting movement. The inserts 70 have a resilient extension 71.

In a similar way as shown in figures 3 or 4, an aperture in a wall may be provided, using a mounting piece 500. The opening in the web of the mounting piece is composed of a large central circular hole, through which the flush mounting box 30 may pass. Similar as shown in figure 5b, the electronical or electrical module 10 is inserted in the aperture in the wall, while the electrical or electronical component having been wired. The backside of the coupling frame 41 may be glued to the web 504.

It is to be understood that although preferred embodiments and/or materials have been discussed for providing embodiments according to the present invention, various modifications or changes may be made without departing from the scope and spirit of this invention.

## Claims

1. An electronical or electrical module (10) comprising:
- an electronical or electrical component (20);
- a flush-mounted box (30) having an open front end (31) adapted to receive said electronical or electrical component (20); and
- a front plate (40) for covering said open front end (31) of said flush-mounted box (30),
wherein said flush-mounted box (30) is provided at its front end (31) with a first coupling means (32) encompassing said front open end (31) and said front plate (40) is provided with a second coupling means (41) at its backside, said first coupling means (32) and said second coupling means (41) being mechanically connectable with each other, said first coupling means and said second coupling means form a snap locking means.

2. A module according to claim 1, wherein said front plate has a front plate opening for receiving an electronical or electrical plug, the front plate opening allowing the plug to be coupled to the electronical or electrical component..

3. A module according to any one of the claims 1 to 2, wherein said first coupling means comprises a frame having an opening encompassing said front open end.

4. A module according to claim 3, wherein said opening in said frame is provided with a recessed collar, the flush mounted box having a rim fitting into said recessed collar.

5. A module according to any one of the claims 3 to 4, wherein said first coupling means comprising one or more elastomeric plugs, each of said plugs being plugged into an aperture in the frame.

6. A module according to claim 5, wherein said first coupling means comprises at least four elastomeric plugs evenly distributed around said opening in said frame.

7. A module according to any one of the claims 5 to 6, wherein said second coupling means comprises one or more pins, each of said elastomeric plugs being adapted to receive and couple to one pin.

8. A module according to claim 7, wherein said one or more pins comprise ball studs.

9. A module according to any one of the claims 7 to 8, wherein said one or more pins are mechanically or chemically connected to the front plate.

10. A module (10) according to any one of the preceding claims, wherein said module (10) further comprises a mounting piece (90) having a web (91) with circumference larger than the circumference of said front plate (40), the web (91) being provided with an opening (92) adapted to pass the flush-mounted box (30) through it, and a rim (93) extending from the web perpendicular to at least one side of the web (91) thereby defining a recess in which the front plate (40) can be sunken.

11. A kit of parts, the kit comprising
- an electronical or electrical component (20);
- a flush-mounted box (30) having an open front end (31) adapted to receive said electronical or electrical component (20); and
- a front plate (40) for covering said open front end (31) of said flush-mounted box (30),
wherein said flush-mounted box (30) is provided at its front end (31) with a first coupling means (32) encompassing said front open end (31) and said front plate (40) is provided with a second coupling means (41) at its backside, said first coupling means (32) and said second coupling mean (41) being mechanically connectable with each other.

12. A kit of parts according to claim 11, said kit further comprising a mounting piece (90) having a web (91) with circumference larger than the circumference of said front plate (40), the web (91) being provided with an opening (92) adapted to pass the flush-mounted box (30) through it, and a rim (93) extending from the web perpendicular to at least one side of the web (91) thereby defining a recess in which the front plate (40) can be sunken.

13. A method to mount an electronical or electrical module (10) in a wall, comprising
- providing an electronical or electrical module (10) according to claim 1 to 10;
- providing an opening in the wall adapted to receive the flush-mounted box (30);
- providing said electronical or electrical component (20) in the flush-mounted box (30);
- providing the front plate to the flush-mounted box (30);
- coupling said first and second coupling means, thereby coupling the front plate to the flush-mounted box (30);
- inserting the flush-mounted box (30) in the opening in the wall.

14. A method according to claim 13, wherein said electronical or electrical module (10) further comprises a mounting piece (90) having a web (91) with circumference larger than the circumference of front plate (40), the web being provided with an opening (92) to receive the flush-mounted box (30) and a rim extending from the web perpendicular to at least one side of the web and defining a recess in which the front plate (40) can be sunken, the method further comprising:
- mounting the mounting piece (90) in said opening in the wall;
- passing the flush-mounted box (30) through the opening in the web of the mounting piece; and
- coupling the flush-mounted box (30) to the web of the mounting piece.
